# EUROPEAN PATENT APPLICATION

(11) **EP 4 763 301 A1**
(43) Date of publication of application: **24.06.2026**
(21) Application number: 24222886.4
(22) Date of filing: 23.12.2024
(51) Int. Cl.: B01D 1/00, F28D 3/04

(54) **MULTI-CYLINDER LIQUID DISTRIBUTOR FOR EVAPORATOR DEVICES**

(71) Applicant: Sealeau, 2509 VP The Hague (NL)
(72) Inventor: Xevgenos, Dimitrios, 2545VP The Hague (NL); Pappas, Panagiotis, 2545VP The Hague (NL)
(74) Representative: Kouzelis, Dimitrios

(57) **Abstract**

A liquid distribution system for heat-exchange or evaporator devices, and more particularly to a multi-cylinder liquid distributor apparatus and a method for fabricating such a system and for creating a vertically falling, uniform liquid curtain. The system comprises an inner hollow cylinder (2), an outer hollow cylinder (4) and optionally a middle cylinder (3) placed coaxially and parallel to the horizon, a feed-in cap (6) comprising a liquid inlet (6') and an end cap (7), wherein the inner cylinder (2) is connected to a liquid inlet (6') and to an outlet (12) having the form of a longitudinal slot with variable width, said width being smaller at the proximity of the feed-in cap (6) than at the end cap (7), and the outer cylinder (4) comprises an outlet (14) having the form of a longitudinal slot. The liquid distributor is fabricated through additive manufacturing of polymer-based composite material.

## Description

The present disclosure relates to liquid distribution systems for heat-exchange or evaporator devices, and more particularly to a multi-cylinder liquid distributor apparatus, a method for fabricating such a system and for creating a vertically falling, uniform liquid curtain.

Liquid distribution systems play a crucial role in various industrial processes, particularly in evaporator devices. These systems are designed to efficiently distribute liquid over a large surface area, enabling effective heat transfer and evaporation. In horizontal evaporators creating a vertically falling film, the uniform distribution of liquid is especially important for maximizing efficiency and product quality.

The heat exchanging tubes which are placed under the liquid distributor are horizontal cylinders and are stacked vertically, one under the other and under the distributor, their axis being on a vertical plane. This kind of evaporator is commonly called 'Horizontal Tube Falling Film Evaporator'.

Conventional liquid distribution systems for evaporators often utilize perforated plates or spray nozzles to disperse a liquid into a fine spray or mist. While these methods have been widely used, they face several challenges in achieving optimal performance. Perforated plates may suffer from uneven flow distribution due to manufacturing tolerances or clogging of individual holes over time. Spray nozzles, on the other hand, can produce non-uniform size droplets and may be prone to clogging or misting, due to high salinity, or the existence of contaminants or organic compounds on the fluid supply or liquids leading to inefficient liquid distribution.

Another common issue in liquid distribution systems is the difficulty in maintaining consistent flow across the entire width of the evaporator, especially in large-scale industrial applications. Variations in liquid flow can result in dry spots or areas of excessive liquid accumulation, both of which reduce the overall efficiency of the evaporation process. Additionally, many existing systems lack the flexibility to adjust the liquid distribution pattern to accommodate different operating conditions or product requirements.

The materials used in conventional liquid distributors can also present challenges. Metal components may be susceptible to corrosion, particularly when handling aggressive fluids such as brine water generated from industrial process (e.g. coal mine effluents) and desalination plants or when concentrating corrosive chemicals such as caustic soda and caustic potash. Brine, or brine water is water with a higher-than-normal concentration of salt, that typically is either sodium chloride, calcium chloride or containing other ions such as sulphates, magnesium etc. This can lead to deterioration of the distributor over time due to corrosion, affecting its performance and potentially contaminating the process fluid.

It has been appreciated that a multi-cylinder liquid distributor is needed that overcomes one or more of these problems.

In a first aspect, a liquid distributor for evaporator device is provided. The liquid distributor in its simplest form includes at least an inner and an outer hollow cylinders of substantially different diameters placed coaxially, the inner into the outer, preferably parallel to the horizon, a feed-in cap comprising an inlet hose of liquid and an end cap, said end cap sealing hermetically the ends of the cylinders, the inner cylinder being connected to the inlet hose and to an outlet having the form of a longitudinal slot with variable width, said width being smaller at the proximity of the feed-in cap than at the end cap, and the outer cylinder comprising a longitudinal slot. The volume of the cylindrical annulus, that is the volume between the outer surface of the inner cylinder and the inner surface of the outer cylinder is preferably, approximately equal to the volume of the inner cylinder.

"Substantially different diameters" may in particular mean that the diameters of the inner and outer hollow cylinders are such that there is a gap/space between an inner circumferential surface of the outer hollow cylinder and an outer circumferential surface of the inner hollow cylinder. It is understood that the corresponding diameter regarding the outer hollow cylinder in the expression "substantially different diameters" refers to an inner diameter of the outer hollow cylinder, and the corresponding diameter regarding the inner hollow cylinder in the expression "substantially different diameters" refers to an outer diameter of the inner hollow cylinder. Advantageously, the inner diameter of the outer hollow cylinder may be at most 1.3 times the outer diameter of the inner hollow cylinder, specifically at most 1.2 times the outer diameter of the inner hollow cylinder, and more specifically at most 1.1 times the outer diameter of the inner hollow cylinder.

This configuration allows for efficient and controlled distribution of liquid in evaporator devices, ensuring a uniform flow pattern and optimizing the evaporation process.

The liquid distributor may be characterized in that the outlet of the inner cylinder is positioned at the highest point above the axis of the inner cylinder and the longitudinal slot of the outer cylinder is positioned at the lowest point below the axis of the outer cylinder.

This arrangement facilitates gravity-assisted flow and ensures creating a uniform liquid curtain falling vertically and uniformly on the evaporator.

The liquid distributor may comprise a middle cylinder, which has a diameter between the inner and the outer cylinders, is coaxial to the inner and the outer cylinders, therefore parallel to the horizon and has an outlet having the form of a longitudinal slot.

The addition of a middle cylinder provides an intermediate stage for liquid distribution, allowing for more precise control over the flow pattern and enhancing the overall efficiency of the evaporator device.

The longitudinal slot of the outlet of the middle cylinder may have variable width. Variable width in the middle cylinder's outlet allows fine-tuning of the liquid flow, accommodating different operational requirements and improving adaptability of the distributor to different fluids.

In the three-cylinders configuration, the outlet of the inner cylinder is positioned at the lowest point below the axis of the inner cylinder, the outlet of the middle cylinder is positioned at the highest point above the axis of the middle cylinder, and the outlet of the outer cylinder, which creates the liquid curtain, is positioned at the lowest point below the axis of the outer cylinder.

This specific configuration of outlet positions optimizes the liquid flow path, ensuring efficient transfer between cylinders and assuring the creation of an even more precise liquid curtain.

The longitudinal slot of the outer cylinder may comprise longitudinal fins which are parallel to the axis of the cylinders and form a canal which determines better the outlet curtain flow direction and thickness. The incorporation of longitudinal fins provides additional control over the liquid curtain formation, enhancing the consistency and uniformity of the liquid distribution.

The canal may be larger at its first end which is adjacent to the exit of the longitudinal slot and narrower at its other end which is remote from said slot. This tapered design of the canal assists in maintaining consistent flow velocity and pressure throughout the length of the distributor.

The width of the canal may also be adjustable. Adjustable canal width allows for on-the-fly modifications to the liquid distribution pattern, enhancing the versatility and adaptability of the distributor to various operational conditions.

The width of the canal may be adjusted through a repositioning mechanism of at least one of the two fins. A repositioning mechanism for the fins provides a practical and efficient means of adjusting the canal width, facilitating easy maintenance and optimization of the distributor's performance.

The width of the canal may be adjusted through the addition of layers of material to the two fins. Adjusting canal width through material addition offers a simple and cost-effective method for fine-tuning the distributor's performance over time.

Also, a method of fabricating the liquid distributor through additive manufacturing is provided. Additive manufacturing enables the production of complex geometries and internal structures, allowing for precise control over the distributor's design and potentially reducing manufacturing costs.

The liquid distributor may be made of polymer-based composite material.

The use of polymer-based composites can provide benefits such as corrosion resistance, light weight, and potentially lower production costs. The liquid distributor may be made of polypropylene reinforced with chopped carbon fibers and graphene. This specific material composition offers a combination of strength, durability, and thermal stability, which are crucial for the distributor's performance in evaporator applications.

The feed-in cap, or lid and the end cap or lid, may comprise three cylindrical protrusions and three cylindrical recesses, the recesses corresponding to the diameters of the cylinders to seal hermetically the ends of the cylinders. This design feature ensures a secure and hermetic seal between the caps and cylinders, preventing leaks and maintaining the integrity of the liquid distribution system.

Also, a use of the liquid distributor for distributing brin water over a vertically falling film evaporator is provided. The use is characterized in that the water flows into an inner cylinder, exits the inner cylinder from the outlet, to flow into the middle cylinder, exits the middle cylinder from the outlet to flow into the outer cylinder and exits the outer cylinder from the outlet by gravity and/or pressure through the longitudinal fins, to create a liquid curtain.

This specific application of the liquid distributor in brine water distribution demonstrates its versatility and effectiveness in creating a uniform liquid curtain for vertically falling film evaporators, potentially improving the efficiency of desalination processes.

The longitudinal slot of the outer cylinder is a slot that in particular extends in the direction of, more specifically parallel to, the axis of the outer cylinder. Further, the expression "longitudinal fins" means that the arrangement of fins extends, i.e., the fins as a whole extend, in the direction of more specifically parallel to, the longitudinal axis of the outer cylinder.
Figure 1. Liquid distribution systems for evaporators according to prior art
Figure 2. Perspective view of the Liquid distribution system of the present invention
Figure 3. Expanded view of the Liquid distribution system of the present invention
Figure 4. Radial section view of the Liquid distribution system of the present invention, with indication of the flows in the cylibnders

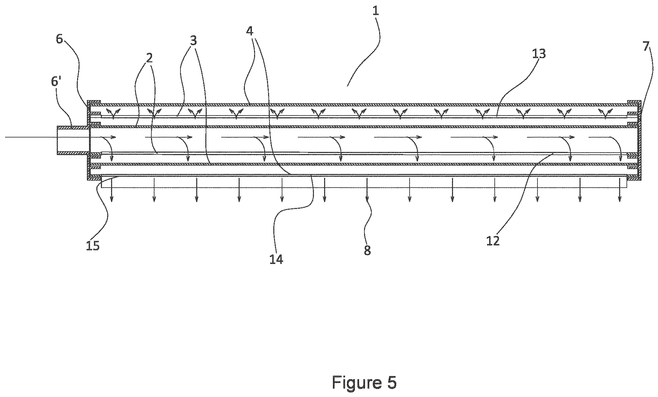

Figure 5. Longitudinal section view of the Liquid distribution system of the present invention

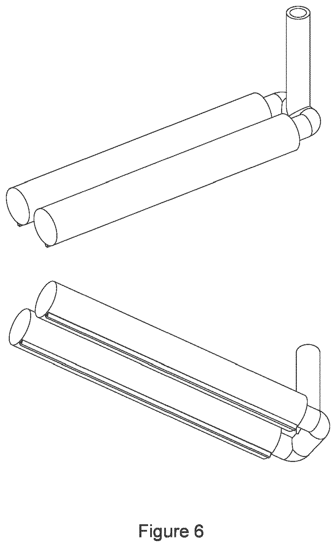

Figure 6. Three-dimensional view of the system in pairs.

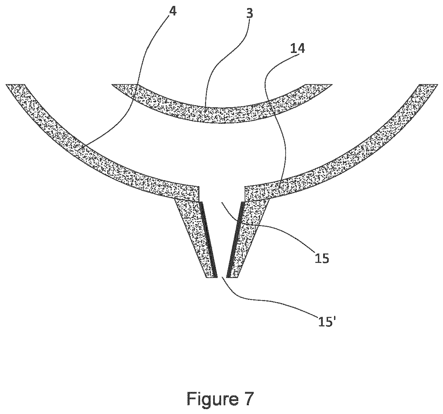

Figure 7. Detailed section view of the outlet slot of the outer cylinder

### Detailed description

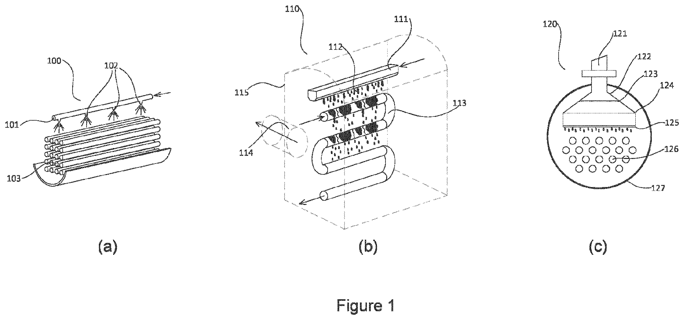

Figure 1 represents three types of evaporators used in the desalination industry or in heat exchangers based on a vertically falling film.

Figure 1(a) represents a spraying nozzle system (100), in which the liquid is fed to the system through a pipe (101) comprising nozzles (102) and distributed over the heated tubes (103), which, in this configuration are several coplanar pipes stack in several levels.

Figure 1(b) represents a desalination system (110) in which the liquid distribution tube (111) is at the top of horizontally placed cylinders or tubes (113). The liquid distribution system of this prior art consists of a cylinder comprising perforations on its lower side, out of which droplets (112) are formed. The droplets are falling by gravity on the horizontal tubes (113) which are heated through vapor circulation inside them.

Figure 1(c) represents the so-called perforated plate system (120), in which the feed in liquid passes through the inlet (121), enters the distributor head (122), passes through a head baffle (123) and is delivered over the heated tubes (126) through a set of perforated plates (124, 125).

The problem of the prior technology is the non-uniform distribution of the liquid over the heated tubes that frequently occurs in falling film evaporators that use a 'conventional' brine delivery system. The present invention takes advantage of relatively simple components and geometries, that combined offer an effective solution, the main advantage is the formation of a more uniform and consistent liquid stream, in the form of liquid curtain or film of liquid. The proposed design also extensively mitigates brine (or liquid, in general) distribution anomalies occurring due to turbulence, pressure drops or flow variations of the feed-in stream. Liquid distribution in the form of a curtain over a tube or a multitude of tubes, offers paramount efficiency for the process, since the amount of liquid dispersed around (and not directly on) the tube is minimized.

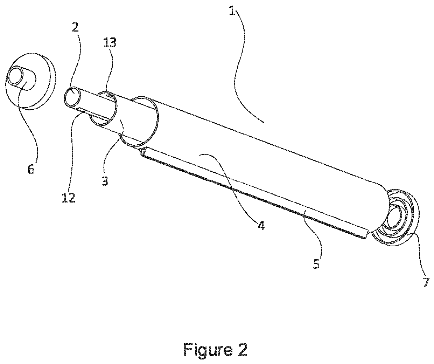

Figure 2a represents the basic configuration of the present invention, in which the liquid distributor (1) for an evaporator device comprises an inner hollow cylinder (2) and an outer hollow cylinder (4) of substantially different diameters placed coaxially, the inner cylinder (2) into the outer (4). As the system works with gravity, the two cylinders are placed horizontally. A feed-in cap (6) comprises a liquid inlet (6') through which the liquid to be evaporated is entering. There is also an end cap (7), which seals hermetically the ends of the cylinders. The inner cylinder (2) is connected to the liquid inlet (6') and comprises an outlet (12) having the form of a longitudinal slot with variable width. The width of the slot is smaller at the proximity of the feed-in cap, where the pressure of the liquid is higher, and bigger at the end cap, where the pressure is lower. This configuration assures that the liquid enters the outer cylinder substantially uniformly. The outer cylinder (4) also comprises a longitudinal slot (14), out of which the liquid is distributed in the form of a film over the heated tubes (not shown in the Figure). In order to form a regular film of liquid, the outlet (12) of the inner cylinder (2) is positioned at the highest point above the axis of the cylinder and the outlet (14) of the outer cylinder (4), where the film is formed, is positioned at the lowest point below the axis of the cylinder.

The feed-in cap (6) and the end cap (7), comprise three cylindrical protrusions and three cylindrical recesses. The recesses correspond to the diameters of the cylinders and are dimensioned in a way to seal hermetically both ends of all cylinders and allow fluid to flow only through the horizontal, longitudinal slots (12, 14).

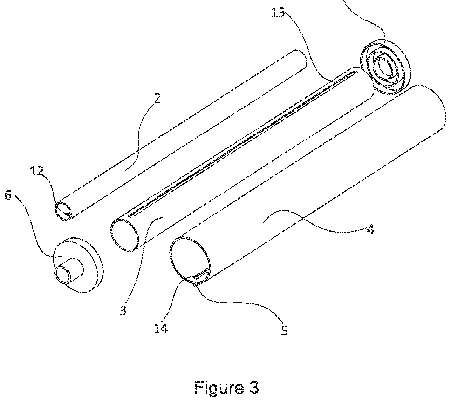

According to a preferred embodiment of the present invention represented in Figures 2(b), 3 and 4, the main body of the liquid delivery system consists of three hollow cylinders (2, 3, 4) of the same length, with three different diameters, placed coaxially. The assembly of the system is such as, to ensure that the liquid feed-in stream follows a one-way path towards the outlet, provided that the cylinders are being filled in sequential order (from the inner smaller to the outer larger one). The feed-in inlet (6') is connected to the inner cylinder (2). As the liquid exits the inner cylinder (2) through the variable width outlet (12), which is positioned at the lowest point of the cylinder, it starts filling the second, or middle cylinder (3), whose exit slot (13) is located on the upper side of the middle cylinder (3). Consequently, the liquid enters the outer, or third cylinder (4) and finally exits the assembly via the linear slot (14) at the bottom, or lowest area of the outer cylinder (4).

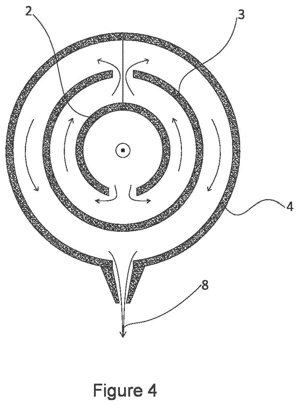

Figure 4 presents a radial section view of the liquid distribution system of the present invention, with indication of the flows in the cylibnders. The liquid enters the inner cylinder (2), exits from the variable width slot (12), flows around the inner cylinder (2) towards the slot (13) of the middle cylinder (3), exits from the slot (13), flows around the middle cylinder (3) and exits from the slot (14) of the outer cylinder (4), passes through the canal formed by the fins (5) to form a liquid curtain (8).

According to another embodiment and in order to increase precision in forming the liquid film, the outlet (13) of the middle cylinder (3) has also a variable width.

The exit slot is equipped with precision engineered longitudinal, directional fins (5), which form a longitudinal canal to optimize the shape and the size of the liquid curtain. This canal is larger at its first end (15) which is adjacent to the exit of the longitudinal slot (14) and narrower at its second end (15') which is remote from said slot. As the liquid distributor can be used with various liquids, it is advantageous, the above-described canal to be adjustable in its width and even in the length of its fins (5). The width can be adjusted through a repositioning mechanism of at least one of the two fins (5). Another method of adjusting the width of the canal and even the length of the fins (5) is through addition of layers of material to at least the one of the two fins.

The liquid distributor of the present invention is fabricated through additive manufacturing. Preferably, the polymer-based composite material is polypropylene reinforced with chopped carbon fibers and graphene.

In use, the liquid distributor of the preferred embodiment of the invention distributes brin water in the form of a vertically falling film evaporator through the following steps: The liquid flows into an inner cylinder (2), exits the inner cylinder (2) from the outlet (12), to flow into the middle cylinder (3), exits the middle cylinder (3) from the outlet (13) to flow into the outer cylinder (4) and exits the outer cylinder (4) from the outlet (14) by gravity and/or pressure through the longitudinal fins, to create a liquid curtain (8).

### LEGEND

1. Distributor of liquid
2. Inner cylinder
3. Middle cylinder
4. Outer cylinder
5. Directional fins
6. Feed-in cap
6'. Inlet hose of liquid
7. End cap
8. Liquid curtain
12. Variable width inner slot
13. Variable width middle slot
14. Outer slot
15. Initial fin clearance
15' End fin clearance
100 spraying nozzle system
101 Feeding pipe
102 nozzles
103 heated tubes
110 desalination system
111 liquid distribution tube
113 horizontally placed cylinders
112 droplets
113 horizontal tubes
120 perforated plate system
121 inlet
122 distributor head
123 head baffle
126 heated tubes
124 perforated plate
125 perforated plate

## Claims

1. Liquid distributor (1) for an evaporator device comprising
- at least an inner hollow cylinder (2) and an outer hollow cylinder (4) of substantially different diameters
- placed coaxially, the inner cylinder (2) into the outer (4), parallel to the horizon,
- a feed-in cap (6) comprising a liquid inlet (6') and an end cap (7), said end cap (7) sealing the ends of the cylinders,
- wherein the inner cylinder (2) is connected to a liquid inlet (6') and to an outlet (12) having the form of a longitudinal slot with variable width, said width being smaller at the proximity of the feed-in cap (6) than at the end cap (7), and,
- wherein the outer cylinder (4) comprises an outlet (14) having the form of a longitudinal slot.

2. The liquid distributor of claim 1, **characterized in that** the outlet (12) of the inner cylinder (2) is positioned at the highest point above the axis of the inner cylinder (2) and the outlet (14) of the outer cylinder (4) is positioned at the lowest point below the axis of the outer cylinder (4).

3. The liquid distributor of claim 1, **characterized in that** it comprises a middle cylinder (3), which has a diameter between the inner cylinder (2) and the outer cylinder (4), is coaxial to the inner cylinder (2) and the outer cylinder (4), and has an outlet (13) having the form of a longitudinal slot.

4. The liquid distributor of claim 3, **characterized in that** the longitudinal slot of the outlet (13) of the middle cylinder (3) has variable width.

5. The liquid distributor of claim 3 or 4, **characterized in that**
- the outlet (12) of the inner cylinder (2) is positioned at the lowest point below the axis of the inner cylinder (2),
- the outlet (13) of the middle cylinder (3) is positioned at the highest point above the axis of the outer cylinder (3) and
- the outlet (14) of the outer cylinder (4) is positioned at the lowest point below the axis of the outer cylinder (4).

6. The liquid distributor of claims 1 to 5, **characterized in that** the longitudinal slot (14) of the outer cylinder comprises longitudinal fins (5) which form a canal and determine the outlet curtain flow direction and thickness.

7. The liquid distributor of claim 6, **characterized in that** the canal is larger at its first end (15) which is adjacent to the exit of the longitudinal slot (14) and narrower at its end (15') which is remote from said slot.

8. The liquid distributor of claim 6 or 7, **characterized in that** the width of the canal is adjustable.

9. The liquid distributor of claim 8, **characterized in that** the width of the canal is adjustable through a repositioning mechanism of at least one of the two fins (5).

10. The liquid distributor of claim 8 or 9, **characterized in that** the width of the canal is adjusted through the addition of layers of material to the two fins (5).

11. Method of fabricating the liquid distributor (1) of claims 1 to 7, through additive manufacturing.

12. The method of claim 11, in which the liquid distributor (1) is made of polymer-based composite material.

13. The method of claim 12, in which the liquid distributor (1) is made of polypropylene reinforced with chopped carbon fibers and graphene.

14. The method of claims 11 to 13, in which the feed-in cap (6) and the end cap (7), comprise three cylindrical protrusions and three cylindrical recesses, the recesses corresponding to the diameters of the cylinders to seal hermetically the ends of the cylinders.

15. Use of the liquid distributor of claims 4 to 10 for distributing brin water over a vertically falling film evaporator **characterized in that** the water flows into an inner cylinder (2), exits the inner cylinder (2) from the outlet (12), to flow into the middle cylinder (3), exits the middle cylinder (3) from the outlet (13) to flow into the outer cylinder (4) and exits the outer cylinder (4) from the outlet (14) by gravity and/or pressure through longitudinal fins (5), to create a liquid curtain (8).
